# EUROPÄISCHE PATENTSCHRIFT

(11) **EP 1 619 434 B1**
(45) Veröffentlichungstag und Bekanntmachung des Hinweises auf die Patenterteilung: **24.09.2008**
(21) Anmeldenummer: 04017085.4
(22) Anmeldetag: 20.07.2004
(51) Int. Cl.: F16L 19/065, F16L 37/092

(54) **Kunststofffitting mit eingesetztem Konusteil**
Plastic fitting with an inserted conical component
Raccord en plastique avec une pièce conique insérée

(43) Veröffentlichungstag der Anmeldung: 25.01.2006
(73) Patentinhaber: Hawle Armaturen GmbH, 83395 Freilassing (DE)
(72) Erfinder: Schmid, Erich, 83416 Saaldorf-Surheim (DE)
(74) Vertreter: Schwabe - Sandmair - Marx

(56) Entgegenhaltungen:
- US-A- 2 463 707
- US-A- 3 576 334

## Beschreibung

Die Erfindung betrifft einen Kunststofffitting mit einem Gehäuse, das ein Konusteil-Anschlussstück aufweist, und mit einem Konusteil, das ein Gehäuseteil-Anschlussstück aufweist.

Solche Kunststofffittinge werden verwendet, um Kunststoffrohre, z.B. PE-Rohre, an fluidführende Einrichtungen anzuschließen, beispielsweise an Fluidleitungsschieber oder Armaturen.

Herkömmlicherweise sind solche Fittinge so ausgestaltet, dass sie ein Konusteil aufweisen, in dem ein Klemmring sitzt, der ebenfalls konisch ausgestaltet ist und sich, nach dem Einschieben des Rohres in das Konusstück, beim Versuch, das Rohr wieder herauszuziehen, im Konusteil verengt und so das Rohr hält.

Bei den genannten herkömmlichen Kunststofffittingen weist das Konusteil ein Gehäuse-Anschlussstück auf, das mit einem Innengewinde versehen ist und zur Montage am Gehäuse über dessen Konusteil-Anschlussstück geführt wird, welches ein Außengewinde aufweist. Mit anderen Worten wird das Konusteil über das Gehäuse geschraubt. Nachteiligerweise kommt bei diesen Ausgestaltungen der Klemmring schon beim Zusammenbau sehr weit am konusteilseitigen Ende des Fittings zu liegen, so dass das Konusteil schon zum Einschieben des Rohres zumindest teilweise gelockert werden muss, um den Klemmring in eine Position verschieben zu können, wo er dieses Einschieben nicht mehr behindert. Auch bei eingeschobenem Rohr liegt der Klemmering bei solchen Konstruktionen sehr weit im Konusteil und wird von außen nur durch dessen Wandung gestützt.

Das Dokument US 2,463,707 offenbart einen Fitting, welcher eine dichte Verbindung zwischen zwei dünnwandigen Leitungen oder Rohren sicherstellen soll. Er umfasst ein Gehäuse, eine Schraube, welche in das Gehäuse eingeschraubt wird und eine konusförmige Buchse, welche im Gehäuse sitzt. Wenn die Schraube in das Gehäuse eingeschraubt wird, schiebt sie die konusförmige Buchse auf die ebenfalls konusförmige Innenwandung des Gehäuses auf, worauf sich die Buchse an ihrem der Schraube abgewandten Ende radial verjüngt und sich in die Außenwandung eines entlang der Rotationsachse von Gehäuse, Schraube und Buchse verlaufenden Rohrstücks eingreift und somit abdichtet. Dadurch kann eine Verbindung zwischen dem besagten Rohrstück und einem weiteren Rohrstück, welches mit dem Gehäuse verbunden ist, hergestellt werden. Allerdings sitzt die konusförmige Buchse innerhalb des Gehäuses, wodurch die nach außen gerichtete Radialkraft der Buchse allein durch das Gehäuse abgestützt werden muss.

Es ist die Aufgabe der vorliegenden Erfindung, einen Kunststofffitting zur Verfügung zu stellen, welcher die oben genannten Nachteile des Standes der Technik überwindet. Insbesondere soll eine Ausgestaltung bereitgestellt werden, bei der das Rohr auch bei zusammengebautem Fitting ohne Weiteres eingeschoben werden kann und ein Klemmring eine möglichst hohe Stützwirkung von außen erhält, wenn das Rohr eingesetzt ist.

Diese Aufgabe wird erfindungsgemäß durch einen Kunststofffitting gemäß dem Patentanspruch 1 und insbesondere durch dessen kennzeichnende Merkmale gelöst. Die Unteransprüche definieren bevorzugte Ausführungsformen der Erfindung.

Erfindungsgemäß weist das Gehäuse-Anschlussstück des Konusteils an seinem Außenumfang ein Verbindungsmittel auf, welches beim Zusammenbau von Gehäuse und Konusteil mit einem Verbindungsmittel in Eingriff kommt, das am Innenumfang des Konus-Anschlussstücks des Gehäuses angeordnet ist. Mit anderen Worten wird gemäß der Erfindung die Verbindungsweise gerade umgekehrt, das Konusteil wird nicht mehr über das Gehäuse, sondern in das Gehäuse hinein gesetzt. Dadurch ergibt sich der Vorteil, dass die Innenwandung des Konusteils am gehäuseseitigen Ende nicht mehr durch das Verbindungsmittel besetzt ist. Bis zum gehäuseseitigen Ende des Konusteils kann also in diesem sowohl der Klemmringgelagert werden, als auch jedwede zusätzlichen Bauteile die gerade in diesem Bereich ihre Funktionen besser erfüllen können als hinter einem Verbindungsmittel relativ nah an der gehäuseabgewandten Seite des Konusteils.

Mit anderen Worten wird innerhalb des Konusteils mehr nutzbarer Platz an einer besonders vorteilhaften Stelle geschaffen.

So weist der Kunststofffitting einen Klemmring auf, der in zusammengebautem Zustand innerhalb des Konusteils im wesentlichen an der Stelle zu liegen kommt, wo das Gehäuse-Anschlussstück und das Konusteil-Anschlussstück über ihm liegen. Der Klemmring sitzt dabei mit seinem dem Gehäuse zugewandten Ende im wesentlichen am gehäuseseitigen Ende des Konusteils. Weil gemäß der vorliegenden Erfindung innen im Konusteil in dessen Gehäuse-Anschlussstück kein Verbindungsmittel, also beispielsweise kein Gewinde, vorhanden ist, lässt es die vorliegende Erfindung in dieser speziellen Ausführungsform zu, den Klemmring innen im Konusteil ganz vorne an dessen gehäuseseitigem Ende anzuordnen.

Dies hat zweierlei Vorteile. Einerseits kommt der Klemmring an einer Stelle zu liegen, wo über ihm sowohl das Gehäuse-Verbindungsstück des Konusteils als auch das Konusteil-Verbindungsstück des Gehäuses liegen, so dass er von außen durch eine doppelte Wandung gestützt wird. Diese gute Stützwirkung kommt insbesondere dann zum Tragen, wenn der Klemmring bei eingesetztem Rohr dadurch aufgeweitet wird, dass eine Zugkraft auf das Rohr ausgeübt wird. Die doppelte Wandstärke außen um den Klemmring herum bietet hierbei eine doppelte Stützfunktion.

Ein weiterer Vorteil der sehr weit zum Gehäuseinneren hin gesetzten Lage des Klemmrings liegt darin, dass dieser in zusammengebautem Zustand nicht an einer relativ verengten Stelle zu liegen kommt, sondern an der Stelle, wo das Konusteil noch den breitesten Innenumfang hat. Deshalb ist es möglich, ein Rohr einzuschieben und zu montieren, ohne dass das Konusteil gelockert werden muss; der Klemmring ist nämlich auf Anschlag vorn im Gehäuse gesetzt und behindert dabei nicht das Eindringen des Rohres.

Die Verbindungsmittel können bevorzugt Gewinde sein, also ein Außengewinde am Konusteil und ein Innengewinde am Gehäuse. Andererseits können im Rahmen der Erfindung auch alle denkbaren weiteren Verbindungsmittel verwendet werden, z.B. Steck- oder Passungsverbindungsteile (Presspassung) oder Formhinterschneidungs-Verbindungsteile wie z.B. Bajonettverbindungsteile.

Die Erfindung wird im Weiteren anhand einer Ausführungsform näher erläutert. Sie kann alle hierin genannten Merkmale einzeln oder in jedweder Kombination umfassen. In der beiliegenden Zeichnung zeigen:
- Figur 1: eine Explosionszeichnung der Bauteile eines erfindungsgemäßen Kunststofffittings; und
- Figur 2: einen erfindungsgemäßen Kunststofffitting in zusammengebautem Zustand.

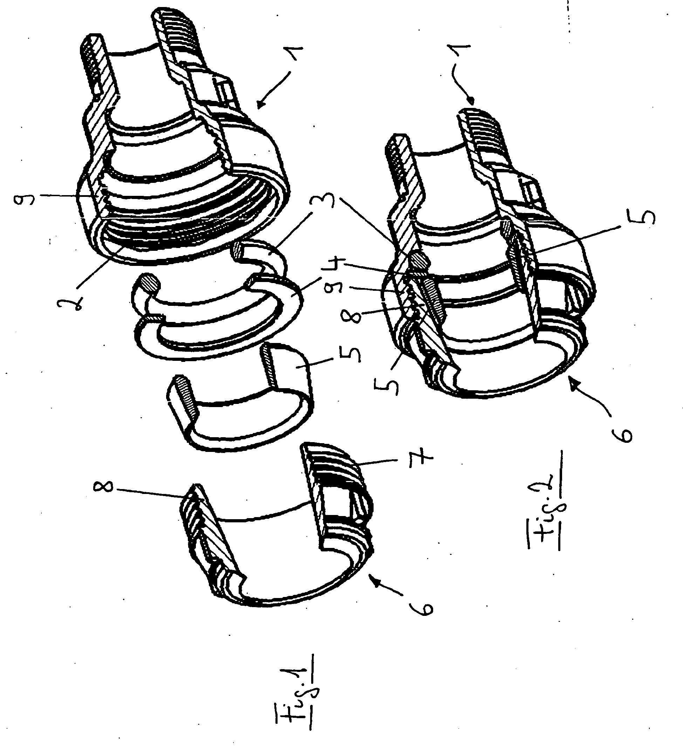

Der in den Figuren 1 und 2 dargestellte Kunststofffitting weist ein Gehäuse 1 mit einem Konusteil-Anschlussstück 9 auf, in das ein innengewinde 2 eingebracht ist. Passend zu diesem Innengewinde hat das Konusteil 6 ein Außengewinde 7 an seinem Gehäuse-Anschlussstück 8. Ferner ist noch der Klemmring 5 vorhanden, der ebenfalls konisch ausgebildet ist, der Anschlagring 4 sowie die O-Ringdichtung 3.

Wie aus Figur 2 deutlich wird, liegen im zusammengebautem Zustand über dem Klemmring 5 sowohl das Gehäuse-Anschlussstück 8 als auch das Konusteil-Anschlussstück 9, der Klemmring sitzt also unter einer Doppelwandung. Diese Doppelwandung kann den Klemmring dann besonders gut stützen, wenn auf ihn eine Kraft von innen ausgeübt wird, also beispielsweise wenn auf ein eingesetztes Rohr eine Zugkraft nach außen ausgeübt wird. Dies schafft einen großen Stabilitätsvorteil gegenüber herkömmlichen Konstruktionen, wo der Klemmring wegen des innen angeordneten Verbindungsmittels (Gewindes) sehr viel weiter auf der dem Gehäuse abgewandeten Seite innerhalb des Konusteils sitzen muss.

In Figur 2 wird ebenfalls deutlich, dass in dem Zustand, wo das Konusteil 6 mit seinem Außengewinde 7 in das Innengewinde 2 des Gehäuses 1 eingeschraubt ist, der Klemmring ganz vorne am Anschlagring 4 sitzen kann. Dies ist natürlich deshalb möglich, weil an dieser Stelle eine glatte Innenwandung des Konusteils vorhanden ist, nicht wie beim Stand der Technik ebenfalls ein Gewinde. In dieser vorderen Stellung am Anschlag 4 hat der Klemmring seinen lockersten Sitz, das heißt, den größten Freiraum und gestattet deswegen ein Einsetzen eines Rohres, ohne dass die Gewindeverbindung 7, 2 gelockert werden muss.

## Patentansprüche

1. Kunststofffitting mit einem Gehäuse (1), das ein Konusteil-Anschlussstück (9) aufweist, und mit einem Konusteil (6), das ein Gehäuse-Anschlussstück (8) aufweist, wobei das Gehäuse-Anschlussstück (8) des Konusteils (6) an seinem Außenumfang ein Verbindungsmittel (7) aufweist, welches beim Zusammenbau von Gehäuse (1) und Konusteil (6) mit einem Verbindungsmittel (2) in Eingriff kommt, das am Innenumfang des Konusteil-Anschlusstücks (9) des Gehäuses angeordnet ist, **dadurch gekennzeichnet, dass** er einen Klemmring (5) aufweist, der im zusammengebauten Zustand innerhalb des Konusteils (6) an der Stelle zu liegen kommt, wo das Gehäuse-Anschlussstück (8) und das Konusteil-Anschlussstück (9) in Form einer Doppelwandung über ihm liegen.

2. Kunststofffitting nach Anspruch 1, **dadurch gekennzeichnet, dass** die Verbindungsmittel (2, 7) Gewinde sind.

3. Kunststofffitting nach Anspruch 1, **dadurch gekennzeichnet, dass** die Verbindungsmittel Steck- oder Passungsverbindungsteile oder Formhinterschneidungs-Verbindungsteile, insbesondere Bajonettverbindungsteile sind.

4. Kunststofffitting nach einem der Ansprüche 1 bis 3, **dadurch gekennzeichnet, dass** der Klemmring (5) mit seinem dem Gehäuse (1) zugewandten Ende im Wesentlichen am gehäuseseitigen Ende des Konusteils (6) in diesem sitzt.

## Claims

1. A plastic fitting, comprising: a casing (1) which comprises a conical part connector piece (9); and a conical part (6) which comprises a casing connector piece (8), wherein the outer circumference of the casing connector piece (8) of the conical part (6) comprises a connection means (7) which, when the casing (1) and the conical part (6) are assembled, passes into engagement with a connection means (2) which is arranged on the inner circumference of the conical part connector piece (9) of the casing, **characterised in that** it comprises a clamping ring (5) which, in the assembled state, comes to rest at the position within the conical part (6) at which the casing connector piece (8) and the conical part connector piece (9) lie over it in the form of a double wall.

2. The plastic fitting according to claim 1, **characterised in that** the connection means (2, 7) are threads.

3. The plastic fitting according to claim 1, **characterised in that** the connection means are plug-type connection parts or fit-type connection parts or shape undercut-type connection parts, in particular bayonet connection parts.

4. The plastic fitting according to any one of claims 1 to 3**, characterised in that** the clamping ring (5) is sat in the conical part (6) via its end facing the casing (1), substantially at the casing end of the conical part (6).

## Revendications

1. Raccord plastique avec un boîtier (1) qui comporte une pièce de raccordement de partie conique, et avec une partie conique (6) qui comporte une pièce de raccordement de boîtier (8), la pièce de raccordement de boîtier (8) de la partie conique (6) présentant sur son pourtour extérieur un moyen de liaison (7) qui, lors de l'assemblage du boîtier (1) et de la partie conique (6), vient en prise avec un moyen de liaison (2) qui est disposé sur le pourtour intérieur de la pièce de raccordement de cône (9) du boîtier, **caractérisé en ce qu'**il comporte une bague de serrage (5) qui, à l'état assemblé, vient se placer à l'intérieur de la partie conique (6) à l'emplacement où la pièce de raccordement de boîtier (8) et la pièce de raccordement de partie conique (9) se situent au-dessus d'elle sous la forme d'une double paroi.

2. Raccord plastique selon la revendication 1, **caractérisé en ce que** les moyens de liaison (2, 7) sont des filetages.

3. Raccord plastique selon la revendication 1, **caractérisé en ce que** les moyens de liaison sont des pièces de liaison par enfichage ou ajustement ou des pièces de liaison à contre-dépouille, en particulier des pièces de liaison à baïonnette.

4. Raccord plastique selon l'une quelconque des revendications 1 à 3, **caractérisé en ce que** la bague de serrage (5) s'ajuste, par son extrémité tournée vers le boîtier (1), sensiblement à l'extrémité côté boîtier de la partie conique (6), dans celui-ci.
